# EUROPEAN PATENT SPECIFICATION

(11) **EP 2 466 987 B1**
(45) Date of publication and mention of the grant of the patent: **18.06.2014**
(21) Application number: 09848208.6
(22) Date of filing: 18.12.2009
(51) Int. Cl.: H04W 88/02, H04M 1/02

(54) **MOBILE COMMUNICATION TERMINAL AND MOBILE COMMUNICATION TERMINAL HOUSING SET WITH AN ANTENNA**
MOBILES KOMMUNIKATIONSENDGERÄT UND GEHÄUSESATZ EINES MOBILEN KOMMUNIKATIONSENDGERÄTS MIT EINER ANTENNE
TERMINAL DE COMMUNICATION MOBILE ET SON LOGEMENT DOTÉ D'UNE ANTENNE

(30) Priority: 11.08.2009 CN 200920172834 U
(43) Date of publication of application: 20.06.2012
(73) Proprietor: ZTE Corporation, Shenzhen, Guangdong 518057 (CN)
(72) Inventor: WANG, Lei, Guangdong 518057 (CN)
(74) Representative: Zerbi, Guido Maria
(86) International application number: PCT/CN2009/075719
(87) International publication number: WO 2011/017878

(56) References cited:
- CN-Y- 2 774 031
- CN-Y- 2 774 031
- CN-Y- 200 987 180
- CN-Y- 200 987 180
- JP-A- 2003 338 864
- JP-A- 2004 363 963
- US-A1- 2002 013 160
- US-A1- 2003 214 801
- US-B1- 6 275 193
- "STYLUS STORAGE WITHIN AN ANTENNA", IBM TECHNICAL DISCLOSURE BULLETIN, INTERNATIONAL BUSINESS MACHINES CORP. (THORNWOOD), US, vol. 38, no. 5, 1 May 1995 (1995-05-01), page 513/514, XP000519662, ISSN: 0018-8689

## Description

### Technical Field

The present invention relates to the field of mobile communication technology, and more particularly, to a mobile communication terminal and a mobile communication terminal shell provided with an antenna so as to ensure the communication quality while implementing miniaturization of the terminal.

### Background of the Related Art

With the continuous progress of the technology, users demand that volumes of mobile communication terminals be as small as possible, and have functions as much as possible, but each function need to have a corresponding functional module positioned in the mobile communication terminal. Therefore, how to reasonably use the limited volume to arrange as many functional modules as possible becomes a problem that is have to be considered in designing a mobile communication terminal.

Today, there are more and more mobile communication terminals (such as mobile phones, personal digital assistants (PDA), etc.) with handwriting input and touch functions. The newly added handwriting input and touch functions need to use a stylus to implement, therefore, the mobile communication terminal need to be provided with a slot for fixing the stylus.

In general, both the antenna and the stylus of the mobile communication terminal need to occupy a relatively large space, which does not meet the requirements of mobile phones for both function diversification and size miniaturization.

Although there are many technical schemes in the existing technology that allow the stylus to have antenna function, the existing technical schemes at least have the following disadvantages.

Although allowing the stylus to have the antenna function can save space, the stylus is used as a main radiator. Therefore, the stylus can play a role of the radiator only when the stylus is put in a slot. Once the stylus is removed, the mobile communication terminal will lose the main radiator, resulting in a sharp decrease in communication quality, or even inability of communication.

### Content of the Invention

In order to solve the problem of decrease in communication quality or of even inability of communication due to removing of a stylus from a slot in the existing technology, an object of the present invention is to provide a mobile communication terminal and a mobile communication terminal shell provided with an antenna so as to ensure the communication quality while implementing miniaturization of the terminal.

In order to achieve the object, the present invention also provides a mobile communication terminal comprising a housing, a stylus holding structure and an antenna, wherein
the antenna is positioned within the housing, and the stylus holding structure is provided on the housing;
wherein
one end of the antenna is provided with a feed terminal and a ground terminal for connecting a main board; and
a portion of the antenna extends into the stylus holding structure, and the portion of the antenna that extends into the stylus holding structure has an elastic bulge which is used to fix the stylus, and a front end portion of the stylus that contacts with the elastic bulge is made of an electrical insulation material;
wherein an end of the elastic bulge that is far away from the feed terminal and the ground terminal extends into the housing and is fixedly connected to the housing.

In the mobile communication terminal, the terminal further comprises a stylus, wherein
the stylus has a front end which contacts with the elastic bulge and is provided with a ring groove or a semi-ring groove; and
the elastic bulge is configured to correspond to the ring groove or semi-ring groove and use an elastic pressure to push and fix the stylus.

In the mobile communication terminal, the antenna is also provided with a hot-melt column which fixes the antenna to the housing.

In the mobile communication terminal, if the antenna is not fixed to the housing and the antenna is also provided with a hot-melt column, the hot-melt column fixes the antenna to the main board.

In the mobile communication terminal, a groove is not provided on the stylus, and the stylus is directly pushed and fixed by the elastic pressure of the elastic bulge.

In the mobile communication terminal, the stylus also comprises:
a middle portion made of a metal material; and
a back end made of an electrical insulation material.

In the mobile communication terminal, the stylus holding structure is a stylus slot with an open formed by an outer surface and inner surface of the housing.

In the mobile communication terminal, the stylus holding structure comprises:
a holding slot positioned outside the housing, and
at least one stop blocks configured to cover the holding slot, and coordinate with the holding slot to form a channel, wherein the stylus is inserted into the stylus holding structure along the channel.

The present invention has the following beneficial effects.

A portion of the antenna extends into the stylus holding structure to form an elastic bulge, and when the stylus is located in a holding space, the stylus can be seized such that it cannot exit the holding space easily. Such design allows the antenna to be combined with the stylus holding structure to effectively reduce the volume of the mobile communication terminal.

When a groove on the stylus mates with the bulge, the stylus will not slide out of the holding space easily.

Since the stylus is not used as a radiator of the mobile communication terminal, functions of the antenna will not be affected and the communication quality is ensured, whether the stylus is located in the holding space or is removed from the holding space.

The mobile communication terminal in accordance with the present invention may be any mobile communication terminal, such as mobile phone, personal digital assistants (PDA), or even MP4 with the wireless communication function, and have wide application range.

### Brief Description of Drawings

FIG. 1 is a structural diagram of a mobile communication terminal in accordance with an embodiment of the present invention;
FIG. 2 is a diagram of a stylus inserted into a holding space partially in accordance with an embodiment of the present invention; and
FIG. 3 is a diagram of a stylus inserted into a holding space entirely in accordance with an embodiment of the present invention.

### Preferred Embodiments of the Present Invention

In a mobile communication terminal and a mobile communication terminal shell provided with an antennas in accordance with an embodiment of the present invention, a portion of the antenna extends into a stylus holding structure to form an elastic bulge, and when the stylus is inserted into a slot, the bulge mates with a groove provided on the stylus such that the stylus cannot slide out of the slot easily.

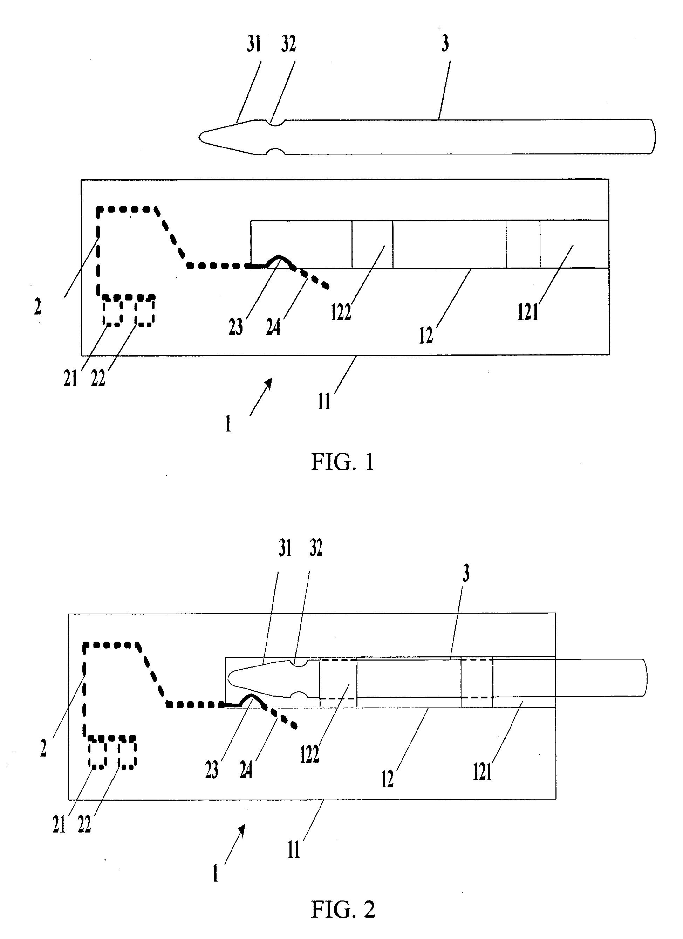

The mobile communication terminal in accordance with the present invention will be described in detail below in conjunction with the accompanying figures. As shown in FIG. 1, the mobile communication terminal 1 in accordance with the embodiment of the present invention has the handwriting or touch input function, and comprises a housing provided with an antenna, and the shell comprises:
a housing 11; and
a stylus holding structure 12 used for insertion of a stylus 3 and provided on the housing 11; a front end 31 of the stylus is provided with a ring groove 32.

An antenna 2 is positioned within the housing 11.

One end of the antenna 2 is provided with a feed terminal 21 and a ground terminal 22 for connecting a main board.

At least one portion of the antenna 2 extends into the stylus holding structure 12, and the portion of the antenna that extends into the stylus holding structure has an elastic bulge 23 corresponding to the ring groove 32 and used to fix the stylus.

Of course, taking the antenna performance into account, the portion of the antenna that extends into the stylus holding structure 12 should be far away from the end provided with the feed terminal 21 and the ground terminal 22.

In the embodiment, if the antenna extends into the holding space, it must pass through the housing. The portion of the antenna that is located in the housing can be used to fix the antenna, that is, the antenna might terminate in the elastic bulge 23. However, in order to further ensure the stability of the antenna, in the mobile communication terminal 1 of the present invention, the end of the elastic bulge 23 that is far away from the feed terminal and the ground terminal further extends into the housing 11 and is fixedly connected to the housing so as to play the role of fixing the antenna. In the specific embodiment of the present invention, the antenna that extends into the housing 11 may be fixed to the housing by a hot-melt column.

Of course, in order to ensure the stability of the antenna, a fixing unit for fixing the antenna to the main board may be provided on the antenna. In the specific embodiment of the present invention, in the case that the antenna is not fixedly connected to the housing, the fixing unit can fix the antenna to the main board by the hot-melt column.

Of course, although the above embodiment is described by taking the ring groove as example, the stylus may be provided with a semi-ring groove, in which case a user just needs to select the right direction for insertion during inserting the stylus, which will not be described in detail here.

In the embodiment, a groove is provided on the stylus, but it should be understood that there may be no groove on the stylus, and an elastic force of the elastic bulge is directly used to push the stylus, and an elastic pressure generated by the elastic bulge is used to fix the stylus such that the stylus cannot exit the holding space easily. Moreover, if a groove is provided on the stylus, such fixing method is more stable.

In the specific embodiment of the present invention, the stylus holding structure 12 may be a stylus slot with an open formed by an outer surface and an inner surface of the housing.

As shown in FIG. 2, the stylus holding structure 12 may comprises:
a holding slot 121 positioned outside the housing, and
at least one stop blocks 122 which cover the holding slot 121 and coordinate with the holding slot to form a channel.

The stop blocks 122 are able to prevent the stylus from sliding out of the groove along the axial direction of the groove.

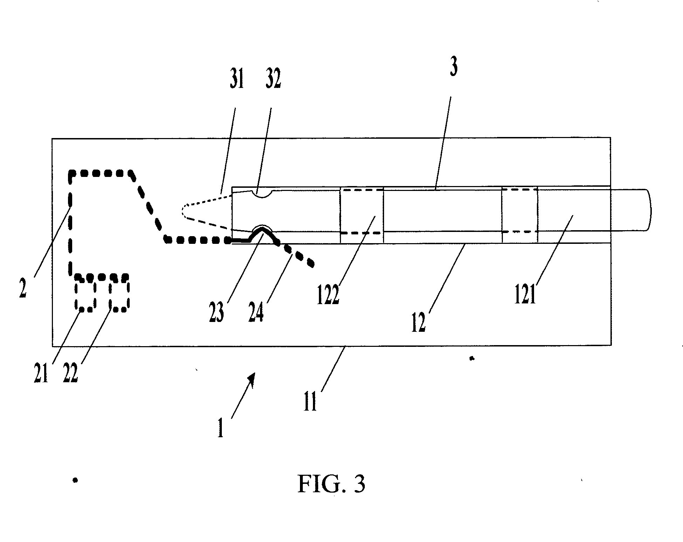

The mobile communication terminal in accordance with the present invention will be described in detail below in conjunction with FIGs. 2 and 3.

Referring to FIG. 2, after a stylus 3 is inserted into a holding space 12 by a distance, a front end of the stylus contacts with an elastic bulge 23. At this point, the stylus 3 is continuously inserted forward, and under the pressure of the stylus 3, the elastic bulge 23 is deformed and compressed, when a ring groove 32 of the stylus 3 reaches the position of the elastic bulge 23, the elastic bulge 23 recovers its original shape under the elastic force of the elastic bulge 23 so as to seize the ring groove 32 of the stylus 3, as shown in FIG. 3, such that the stylus cannot exit the holding space easily in the axial direction of the holding space.

In the process of removing the stylus 3, since a pulling force results in the pressure on the elastic bulge 23, the elastic bulge 23 is deformed and compressed such that the stylus 3 can be removed from the holding space 12.

Of course, the material of the front end of the stylus 3 is an electrical insulation material such that the antenna performance is not affected after contacting with the elastic bulge.

Of course, taking the practical application into account, the stylus 3 may be composed of three portions:
a front end made of the electrical insulating material and provided with the ring groove 32;
a middle portion made of a metal material; and
a back end made of the electrical insulating material.

Meanwhile, according to the change of requirements of RF systems, an antenna unit may be set longer so as to operate in a lower frequency band, or it may also be set shorter so as to operate at a higher frequency. In the embodiment of the present invention, the specific design of the antenna unit is not limited.

The present invention has the following advantages.

A portion of the antenna of the mobile communication terminal extends into the stylus holding structure to form an elastic bulge which mates with a groove on the stylus such that the stylus will not slide out of the holding space easily. Such design allows the antenna to be combined with the stylus holding structure so as to effectively reduce the volume of the mobile communication terminal.

Whether the stylus is located in the holding space or is removed from the holding space, the antenna will not be affected, thereby ensuring the communication quality.

The mobile communication terminal in accordance with the present invention may be any mobile communication terminal, such as mobile phone, personal digital assistants (PDA), or even MP4 with the wireless communication function, and have wide application range.

The above description is only the preferred embodiments of the present invention, and it should be noted that some modifications and improvements may be made by those skilled in the art without departing from the principle of the present invention. All these modifications and improvements should be regarded as within the protection scope of the present invention.

### Industrial Applicability

In the present invention, a portion of the antenna of the mobile communication terminal extends into the stylus holding structure to form an elastic bulge which mates with a groove on the stylus such that the stylus will not slide out of the holding space easily. Such design allows the antenna to be combined with the stylus holding structure so as to effectively reduce the volume of the mobile communication terminal. Whether the stylus is located in the holding space or is removed from the holding space, the antenna will not be affected, thereby ensuring the communication quality. The mobile communication terminal in accordance with the present invention may be any mobile communication terminal, such as mobile phone, personal digital assistants (PDA), or even MP4 with the wireless communication function, and have wide application range.

## Claims

1. A mobile communication terminal comprising a housing (11), a stylus holding structure (12), a stylus (3) and an antenna (2), **characterized in that**:
the antenna (2) is positioned within the housing (11), and the stylus holding structure (12) is provided on the housing (11);
wherein
one end of the antenna (2) is provided with a feed terminal (21) and a ground terminal (22) for connecting a main board; and
a portion of the antenna (2) extends into the stylus holding structure (12), and the portion of the antenna (2) that extends into the stylus holding structure (12) has an elastic bulge (23) which is used to fix the stylus (3), and a front end portion of the stylus (3) that contacts with the elastic bulge (23) is made of an electrical insulation material;
wherein an end of the elastic bulge (23) that is far away from the feed terminal (21) and the ground terminal (22) extends into the housing (11) and is fixedly connected to the housing (11).

2. The mobile communication terminal according to claim 1, wherein
the stylus (3) has a front end (31) which contacts with the elastic bulge (23) and is provided with a ring groove or a semi-ring groove (32); and
the elastic bulge (23) corresponds to the ring groove or the semi-ring groove (32) and is configured to use an elastic pressure to push and fix the stylus (3).

3. The mobile communication terminal according to claim 1, wherein the antenna (2) is also provided with a hot-melt column which fixes the antenna (2) to the housing (11).

4. The mobile communication terminal according to claim 1 or 2, wherein if the antenna (2) is not fixed to the housing (11) and the antenna (2) is also provided with a hot-melt column, the hot-melt column fixes the antenna (2) to the main board.

5. The mobile communication terminal according to claim 2, wherein a groove is not provided on the stylus (3), and the stylus (3) is directly pushed and fixed by the elastic pressure of the elastic bulge (23).

6. The mobile communication terminal according to claim 5, wherein the stylus (3) also comprises:
a middle portion made of a metal material; and
a back end made of an electrical insulation material.

7. The mobile communication terminal according to claim 1 or 2, wherein the stylus holding structure (12) is a stylus slot with an open formed by an outer surface and inner surface of the housing (11).

8. The mobile communication terminal according to claim 1 or 2, wherein the stylus holding structure (12) comprises:
a holding slot (121) positioned outside the housing (11), and
at least one stop blocks (122) configured to cover the holding slot (121), and coordinate with the holding slot (121) to form a channel, wherein the stylus (3) is inserted into the stylus holding structure (12) along the channel.

## Patentansprüche

1. Ein Mobilkommunikationsendgerät, das ein Gehäuse (11), eine Eingabestift-Haltestruktur (12), einen Eingabestift (3) und eine Antenne (2) beinhaltet, **dadurch gekennzeichnet, dass**:
die Antenne (2) innerhalb des Gehäuses (11) positioniert ist und die Eingabestift-Haltestruktur (12) an dem Gehäuse (11) bereitgestellt ist;
wobei
ein Ende der Antenne (2) mit einem Speiseanschluss (21) und einem Masseanschluss (22) zur Verbindung mit einer Hauptplatine versehen ist; und
sich ein Abschnitt der Antenne (2) in die Eingabestift-Haltestruktur (12) erstreckt und der Abschnitt der Antenne (2), der sich in die Eingabestift-Haltestruktur (12) erstreckt, eine elastische Ausbuchtung (23) aufweist, die verwendet wird, um den Eingabestift (3) zu fixieren, und ein Vorderendabschnitt des Eingabestiftes (3), der die elastische Ausbuchtung (23) berührt, aus einem elektrisch isolierenden Material gefertigt ist;
wobei sich ein Ende der elastischen Ausbuchtung (23), das von dem Speiseanschluss (21) und dem Masseanschluss (22) weit entfernt ist, in das Gehäuse (11) erstreckt und fest mit dem Gehäuse (11) verbunden ist.

2. Mobilkommunikationsendgerät gemäß Anspruch 1, wobei
der Eingabestift (3) ein Vorderende (31) aufweist, das die elastische Ausbuchtung (23) berührt und mit einer Ringrille oder einer Halbringrille (32) versehen ist; und
die elastische Ausbuchtung (23) der Ringrille oder der Halbringrille (32) entspricht und konfiguriert ist, um einen elastischen Druck zu verwenden, um den Eingabestift (3) zu drücken und zu fixieren.

3. Mobilkommunikationsendgerät gemäß Anspruch 1, wobei die Antenne (2) auch mit einer Heißschmelzstütze versehen ist, die die Antenne (2) an dem Gehäuse (11) fixiert.

4. Mobilkommunikationsendgerät gemäß Anspruch 1 oder 2, wobei, wenn die Antenne (2) nicht an dem Gehäuse (11) fixiert ist und die Antenne (2) auch mit einer Heißschmelzstütze versehen ist, die Heißschmelzstütze die Antenne (2) an der Hauptplatine fixiert.

5. Mobilkommunikationsendgerät gemäß Anspruch 2, wobei auf dem Eingabestift (3) keine Rille bereitgestellt ist und der Eingabestift (3) durch den elastischen Druck der elastischen Ausbuchtung (23) direkt gedrückt und fixiert wird.

6. Mobilkommunikationsendgerät gemäß Anspruch 5, wobei der Eingabestift (3) auch Folgendes beinhaltet:
einen mittleren Abschnitt, der aus einem Metallmaterial gefertigt ist; und
ein Rückende, das aus einem elektrisch isolierenden Material gefertigt ist.

7. Mobilkommunikationsendgerät gemäß Anspruch 1 oder 2, wobei die Eingabestift-Haltestruktur (12) ein Eingabestiftschlitz mit einer Öffnung ist, die durch eine äußere Oberfläche und eine innere Oberfläche des Gehäuses (11) gebildet wird.

8. Mobilkommunikationsendgerät gemäß Anspruch 1 oder 2, wobei die Eingabestift-Haltestruktur (12) Folgendes beinhaltet:
einen Halteschlitz (121), der außerhalb des Gehäuses (11) positioniert ist, und
mindestens einen Anschlagblock (122), der konfiguriert ist, um den Halteschlitz (121) abzudecken und mit dem Halteschlitz (121) zusammenzuwirken, um einen Kanal zu bilden, wobei der Eingabestift (3) entlang dem Kanal in die Eingabestift-Haltestruktur (12) eingeführt wird.

## Revendications

1. Un terminal de communication mobile comprenant un boîtier (11), une structure de retenue de stylet (12), un stylet (3) et une antenne (2), **caractérisé en ce que** :
l'antenne (2) est positionnée à l'intérieur du boîtier (11), et la structure de retenue de stylet (12) est prévue sur le boîtier (11) ;
dans lequel
une extrémité de l'antenne (2) est pourvue d'une borne d'alimentation (21) et d'une borne de terre (22) pour le raccordement à une carte principale ; et
une portion de l'antenne (2) s'étend dans la structure de retenue de stylet (12), et la portion de l'antenne (2) qui s'étend dans la structure de retenue de stylet (12) présente un renflement élastique (23) qui est utilisé pour fixer le stylet (3), et une portion d'extrémité avant du stylet (3) qui se met en contact avec le renflement élastique (23) est réalisée en un matériau d'isolation électrique ;
dans lequel une extrémité du renflement élastique (23) qui est éloignée de la borne d'alimentation (21) et de la borne de terre (22) s'étend dans le boîtier (11) et est raccordée de manière fixe au boîtier (11).

2. Le terminal de communication mobile selon la revendication 1, dans lequel
le stylet (3) présente une extrémité avant (31) qui se met en contact avec le renflement élastique (23) et est pourvu d'une rainure annulaire ou d'une rainure semi-annulaire (32) ; et
le renflement élastique (23) correspond à la rainure annulaire ou à la rainure semi-annulaire (32) et est configuré pour utiliser une pression élastique pour pousser et fixer le stylet (3).

3. Le terminal de communication mobile selon la revendication 1, dans lequel l'antenne (2) est également pourvue d'une colonne thermofusible qui fixe l'antenne (2) au boîtier (11).

4. Le terminal de communication mobile selon la revendication 1 ou la revendication 2, dans lequel si l'antenne (2) n'est pas fixée au boîtier (11) et que l'antenne (2) est également pourvue d'une colonne thermofusible, la colonne thermofusible fixe l'antenne (2) à la carte principale.

5. Le terminal de communication mobile selon la revendication 2, dans lequel il n'est pas prévu de rainure sur le stylet (3), et le stylet (3) est directement poussé et fixé par la pression élastique du renflement élastique (23).

6. Le terminal de communication mobile selon la revendication 5, dans lequel le stylet (3) comprend également :
une portion médiane réalisée en un matériau métallique ; et
une extrémité arrière réalisée en un matériau d'isolation électrique.

7. Le terminal de communication mobile selon la revendication 1 ou la revendication 2, dans lequel la structure de retenue de stylet (12) est une fente pour stylet avec une ouverture formée par une surface externe et une surface interne du boîtier (11).

8. Le terminal de communication mobile selon la revendication 1 ou la revendication 2, dans lequel la structure de retenue de stylet (12) comprend :
une fente de retenue (121) positionnée à l'extérieur du boîtier (11), et
au moins un bloc d'arrêt (122) configuré pour couvrir la fente de retenue (121), et coopérer avec la fente de retenue (121) pour former un canal, dans lequel le stylet (3) est inséré dans la structure de retenue de stylet (12) le long du canal.
